(19) Europäisches Patentamt
European Patent Office
Office européen des brevets

(11) **EP 2 082 537 B1**

(12) **EUROPEAN PATENT SPECIFICATION**

(45) Date of publication and mention
of the grant of the patent:
**20.11.2013 Bulletin 2013/47**

(21) Application number: **07754697.6**

(22) Date of filing: **30.03.2007**

(51) Int Cl.:
**H04L 12/24** (2006.01)    **H04L 12/28** (2006.01)
**H04W 16/18** (2009.01)

(86) International application number:
**PCT/US2007/008213**

(87) International publication number:
**WO 2008/042013 (10.04.2008 Gazette 2008/15)**

(54) **SYSTEM AND METHOD FOR RE-HOME SEQUENCING OPTIMIZATION**

SYSTEM UND VERFAHREN ZUR RE-HOME-SEQUENZIERUNGSOPTIMIERUNG

SYSTÈME ET PROCÉDÉ POUR UNE OPTIMISATION DE SÉQUENCEMENT DE RÉHÉBERGEMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **02.10.2006 US 849139 P**

(43) Date of publication of application:
**29.07.2009 Bulletin 2009/31**

(73) Proprietor: **Cerion Optimization Services, Inc.
Frisco, TX 75034 (US)**

(72) Inventors:
• **LIU, Feng
Frisco, Texas 75035 (US)**
• **LI, Dongdong
Dallas, Texas 75287 (US)**
• **EGNER, Will A.
Allen, Texas 75013 (US)**
• **LIAO, Chen
Frisco, Texas 75035 (US)**
• **ZHENG, Yindong
Frisco, Texas 75035 (US)**
• **LIU, He
Bellevue, Washington 98005 (US)**

(74) Representative: **Epping - Hermann - Fischer
Patentanwaltsgesellschaft mbH
Ridlerstrasse 55
80339 München (DE)**

(56) References cited:
**WO-A2-2006/052269    US-A- 5 937 042
US-A- 5 940 373    US-A- 6 055 433
US-A1- 2005 097 161    US-A1- 2008 109 731**

## Description

RELATED APPLICATION DATA

This application claims the benefit of U.S. Provisional Application No. 60/849,139, filed on October 2, 2006, entitled "System and Method for Network Elements Re-home Sequencing for Wireless Communication Networks," which application is hereby incorporated herein by reference.

CROSS-REFERENCE TO RELATED APPLICATIONS

This application relates to the following co-pending and commonly assigned patent applications: Serial No. 10/585,011, publication number US 2008-0046306 A1, filed June 29, 2006, entitled "System and Method for Analyzing Strategic Network Investments in Wireless Networks;" and Serial No. PCT/US06/30744, filed August 8, 2006, entitled "System and Method for Reduction of Cost of Ownership for Wireless Communication Networks,".

TECHNICAL FIELD

The present invention relates in general to telecommunication networks having a plurality of network elements, and in particular to a system and method for generating a practicable optimized sequencing plan in telecommunication networks.

BACKGROUND

The wireless telecommunications industry has been experiencing tremendous growth for the past several years, with wireless service providers trying to reduce customer churn by maintaining service quality and smoothly running their networks at a lower cost. To achieve these and other goals, generally a first step in network planning and optimization may be the development of a rehome plan. In a rehome plan, a network planner generally determines how to configure network elements in a geographical area to load balance the network due to traffic growth and migrations, minimize the mobility of the traffic flow to reduce its impact on the network performance, etc. Approaches to configuring network topologies for a network rehome plan are discussed in, for example, U.S. Pat. No. 5,937,042, entitled "Method and System for Rehome Optimization," and U.S. Pat. No. 6,055,433, entitled "Data Processing System and Method for Balancing a Load in a Communications Network," which patents are hereby incorporated herein by reference.
Generally, merely having a rehome plan is insufficient from an implementation perspective. The next step for the network planner after determining a rehome plan generally is determining how to implement the rehome plan  considering practical implementation constraints and minimization of disruption of network performance. Determining such an optimal rehoming sequence plan, while satisfying practical network constraints, can be difficult and time consuming.
Document US 6 055 433 discloses a system for rehoming of subscribers in a mobile network. The number of steps of rehoming should be minimized as rehoming activities are costly. The benefit of all rehoming actions are calculated and summed up, so that the solution with the highest benefit can be implemented.

SUMMARY OF THE INVENTION

These and other problems are generally solved or circumvented, and technical advantages are generally achieved, by preferred embodiments of the present invention which generate a practicable optimized sequencing plan for telecommunication networks.
Embodiments of the present invention provide methods and computer programs for generating a rehome sequencing plan for a telecommunications network, comprising inputting an initial topology of network elements for the telecommunications network, generating an initial rehome sequencing plan for rehoming the telecommunications network from the initial topology to a final topology of network elements, and modifying an order of rehome sequencing steps in the initial rehome sequencing plan to generate an optimized rehome sequencing plan having minimized cost.
Other embodiments of the present invention provide a system for generating an optimized rehome sequencing plan for a telecommunications network, wherein the system may comprise a sequencing plan manager configured to generate rehome sequencing plans for rehoming the telecommunications network from an initial network element topology to a final network element topology, a sequencing plan optimizer configured to search for the optimized rehome sequencing plan for the telecommunications network, a sequencing plan calculator configured to determine costs of the rehome sequencing plans, a persistent storage for storing data about the network element topologies, the network elements, and network mobility information, a network manager configured to retrieve the data from persistent storage and format the data into data structures usable by the sequencing plan manager, the sequencing plan optimizer and the sequencing plan calculator, and a graphical user interface for interacting with a user of the system.

An advantage of an embodiment of the present invention is that it optimizes the sequencing or the order of the transition states of the network topologies rather than merely a snapshot of the network topology.

Another advantage of an embodiment of the present invention is that it optimizes the sequencing or the order of the transition states of the network topologies while satisfying practical network constraints.

BRIEF DESCRIPTION OF THE DRAWINGS

For a more complete understanding of the present invention, and the advantages thereof, reference is now made to the following descriptions taken in conjunction with the accompanying drawings, in which:

FIG. 1 is a block diagram of a preferred embodiment of the present invention;

FIG. 2 is a block/flow diagram illustrating rehome sequencing plans generated from an initial network topology and a final network topology;

FIG. 3 is a block/flow diagram illustrating detailed rehome sequencing steps in a rehome sequencing plan;

FIG. 4A is a geographical display of the performance of a rehome sequencing plan;

FIG. 4B is a chart display of the performance of a rehome sequencing plan;

FIG. 4C is a report table display of the performance of a rehome sequencing plan;

FIG. 5 is a flow chart of a sequencing plan manager;

FIG. 6 is a flow chart of a sequencing plan calculator;

FIG. 7A is a flow chart of a cluster generation process;

FIG. 7B is a flow chart of a greedy search process used to optimize an existing rehome sequencing plan; and

FIG. 7C is a flow chart of a simulated annealing process used to optimize an existing rehome sequencing plan.

DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely homogeneous or heterogeneous telecommunications networks. In particular, the present invention will be described with respect to GSM wireless telecommunications networks having a plurality of network elements such as base transceiver stations (BTSs), base station controllers (BSCs), and mobile switching centers (MSCs). The invention also may be applied, however, to other telecommunications networks utilizing telecommunication topology transition optimization or to other systems utilizing optimal reallocation of finite interconnected resources.

In accordance with embodiments of the invention, a method and system may automatically determine practicable optimized rehome sequencing plans. Specifically, given a rehome plan with an initial network topology and a final network topology, these embodiments may optimize the order of rehome sequencing steps in such a way that the overall cost and individual costs of the rehome sequencing steps are minimized while the practical constraints are satisfied. As a general case, in one rehome sequencing step, multiple homogenous or heterogeneous network elements from the same network or different networks, respectively, may be rehomed in a cluster-wise way. As a special case, the network elements may be moved one by one in each rehome sequencing step, where the number of network elements involved in the rehome, i.e., the size of the rehome cluster, is 1. The rehome cluster may be advantageously grouped in such a way that the network elements in the rehome cluster are adjacent to each other in terms of closer geographical distance or less mobility traffic between rehome clusters. Depending on the cluster size, the number of rehome sequencing steps may be different for a given number of network elements in a rehome sequencing plan.

After each rehome sequencing step, the corresponding cost may be calculated and expressed in a unified unit such as the net present value (NPV). Generally, the cost for each rehome sequencing step may be affected by prior rehome sequencing steps and may be a function of the mobility of the traffic and the network element utilization. The cost may be scored higher if there is, for example, load unbalancing or more mobility traffic in the network after a rehome sequencing step. The overall cost of the rehome sequencing plan is a function of the costs of all sequencing steps in the rehome sequencing plan. When the number of sequencing steps in the rehome sequencing plan is large, the overall cost of the rehome sequencing plan may be higher due to the longer time span required, assuming that each sequencing step takes a fixed certain amount of time to complete. When the cost of each individual sequencing step is higher, the overall cost of the rehome sequencing plan is higher as well.

In accordance with another embodiment, a series of method steps, such as a heuristic approach, a greedy search approach, a simulated annealing approach, or a combination thereof, may automatically optimize an existing rehome sequencing plan or generate a new optimal rehome sequencing plan while satisfying practical constraints. If a new practicable optimized rehome sequencing plan is desirable, the methods may start from an initial rehome sequencing plan with random or heuristic permutation of the rehome sequencing steps, and then may optimize this initial rehome sequencing plan by using one of the methods used to optimize an existing rehome sequencing plan.

Taking a simulated annealing method as an example, the method may start from an initial rehome sequencing plan and may search for an alternative sequencing plan with either a higher or lower cost. The alternative sequencing plan with a lower cost may be accepted with a higher probability while the plan with a higher cost may be accepted with a lower probability. The acceptance probability of an alternative rehome sequencing plan with a lower cost gradually may become higher as the progress of the search deepens. Accepting an alternative rehome sequencing plan with a lower cost may be used to search for a globally optimal rehome sequencing plan. Theoretically, the simulated annealing may find the absolute optimal rehome sequencing plan with the lowest cost. In reality, the simulated annealing approach, for example, generally may find a practicable optimized rehome sequencing plan with a cost very close to the lowest cost. These embodiments also may allow the network planner to manually adjust an existing rehome sequencing plan by changing the clustering of network elements and the order of the sequencing steps.

In accordance with other embodiments, a method and system generally may display the cost of every individual rehome sequencing step and the overall cost of the rehome sequencing plan with a graphical user interface (GUI). The GUI also may display the network topologies generated before and after every rehome sequencing step and may compare multiple network topologies in a geographical map as well as in a report format. In addition, the GUI may provide a platform for the network planner to manually adjust the clustering of network elements, the grouping of clusters into a rehome sequencing step, and the order of the rehome sequencing steps in a rehome sequencing plan. The GUI also may receive specific method-related parameter inputs from the network planner. At the back end, persistent storage may store the network topologies, costs of network topologies, user operation histories, and miscellaneous system maintenance activities. The persistent storage also may be used to load historical rehome sequencing plans and to recover from system crashes.

Generally, a network planner determines a rehome sequencing plan to migrate the network from an initial network topology (or state) to a target network topology (or state). In conjunction with the embodiments disclosed herein, the final network topology may be derived using systems and methods disclosed in Serial No. PCT/US06/30744, filed August 8, 2006, entitled "System and Method for Reduction of Cost of Ownership for Wireless Communication Networks" Also in conjunction with the embodiments disclosed herein, analysis, deployment and decommissioning of capital investments in a network topology may be performed using systems and methods disclosed in Serial No. 10/585,011, filed June 29, 2006, entitled "System and Method for Analyzing Strategic Network Investments in Wireless Networks."

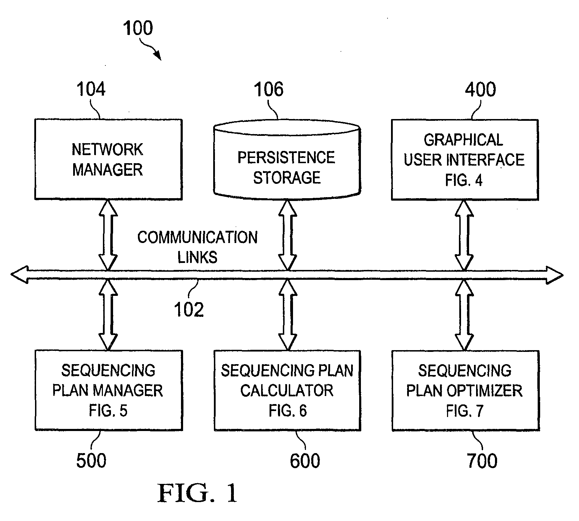

With reference to FIG. 1, there is shown a block diagram of a preferred embodiment computer system 100 for determining a practicable optimized rehoming sequence for a telecommunications network. Rehome sequencing generally refers to an ordered set of network states that are middle steps to migrate the network topology from the initial state to the final state. A particular rehome sequence generally is a selected permutation of the various rehome activities. One rehome activity generally changes the network connectivity of a network element or a cluster of network elements. System 100 may be implemented in software code on one or more computers, which may be PCs, workstations, servers and the like, and which may be commonly located or distributed. System 100 includes graphical user interface (GUI) 400 that interacts with network planners and communicates with other components in system 100 using communication links 102. GUI 400 may be viewed by a network planner on any type of computer display or monitor. Sequencing plan manager 500 generates a list of sequencing plans, while sequencing plan calculator 600 calculates the cost of each individual rehome sequencing step as well as the overall cost of a rehome sequencing plan, and sequencing plan optimizer 700 optimizes an existing sequencing plan.

Network manager 104 may temporarily store the network topologies, network demand, and network element capacities read from persistence storage 106, for example, permanent or non-volatile magnetic, optical or electronic storage in the form of files, database tables, and the like. Communication links 102 connect all the components in computer system 100 and provide message exchanges between them. Communication links 102 may be any combination of inter-module messaging protocols, internal or external computer buses, and wired or wireless network connections such as local area or wide area networks, Ethernet, Internet, and the like. The various elements of system 100 may be implemented in software executed from active system memory such as random access memory by one or more processors.

The network topologies, network elements including their types and capacities, and network mobility in terms of handovers and location updates between network elements may be stored magnetically, optically or electrically in persistent storage 106 in the form of, e.g., files, database tables, and tapes. Persistent storage 106 also may store historical rehome sequencing plans and user operations. Persistent storage 106 also may have standby and data backup systems. A standby system may provide hot standby to minimize failure rate while a data backup system may be used to recover the system from disaster by periodically backing up the system, e.g., on a daily or weekly basis.

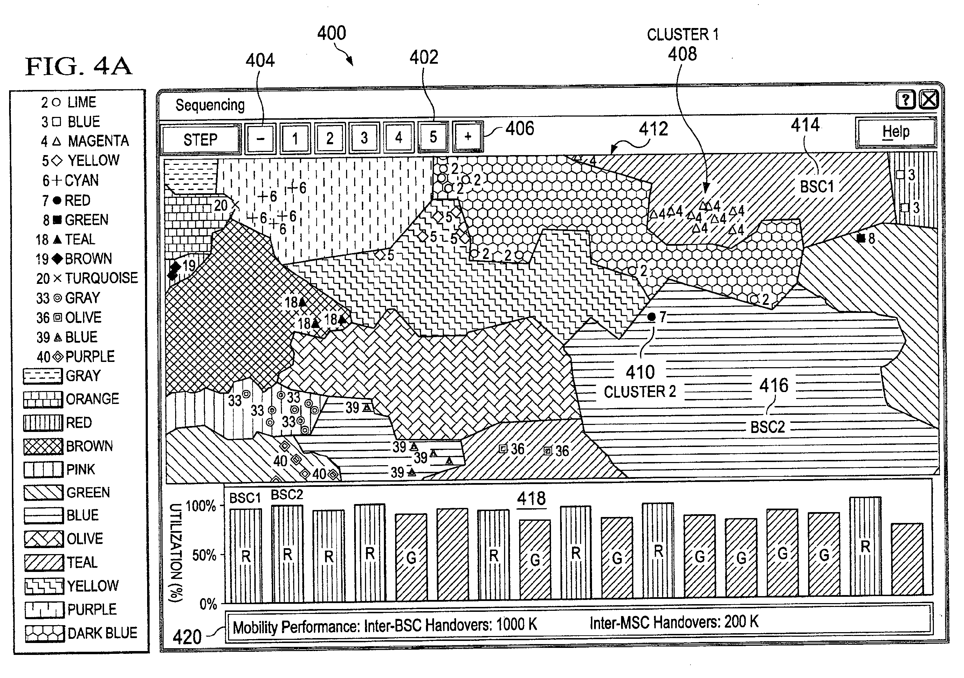

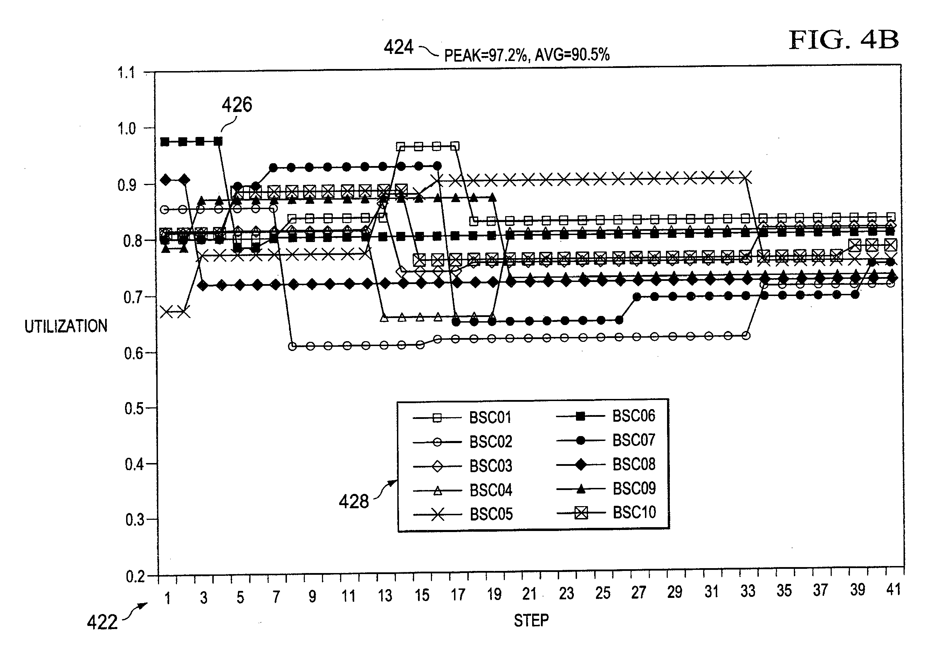

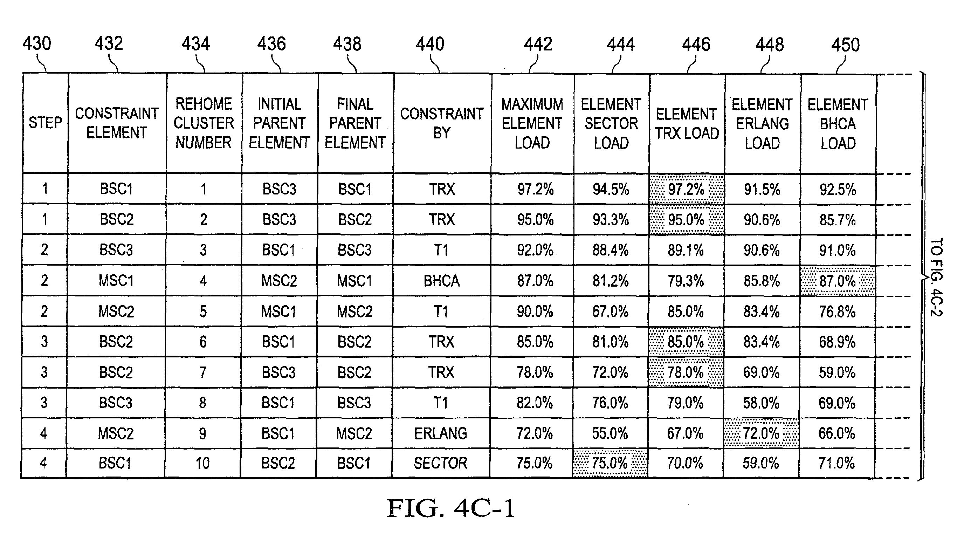

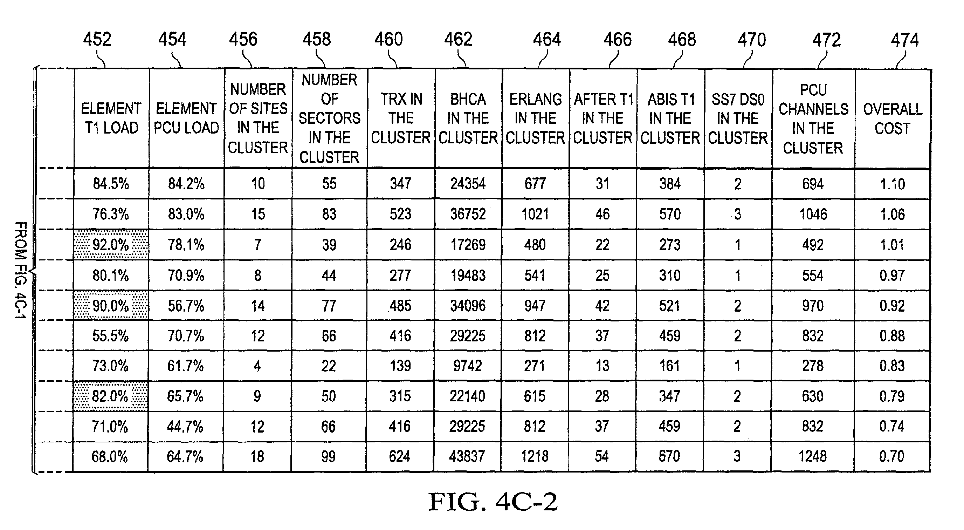

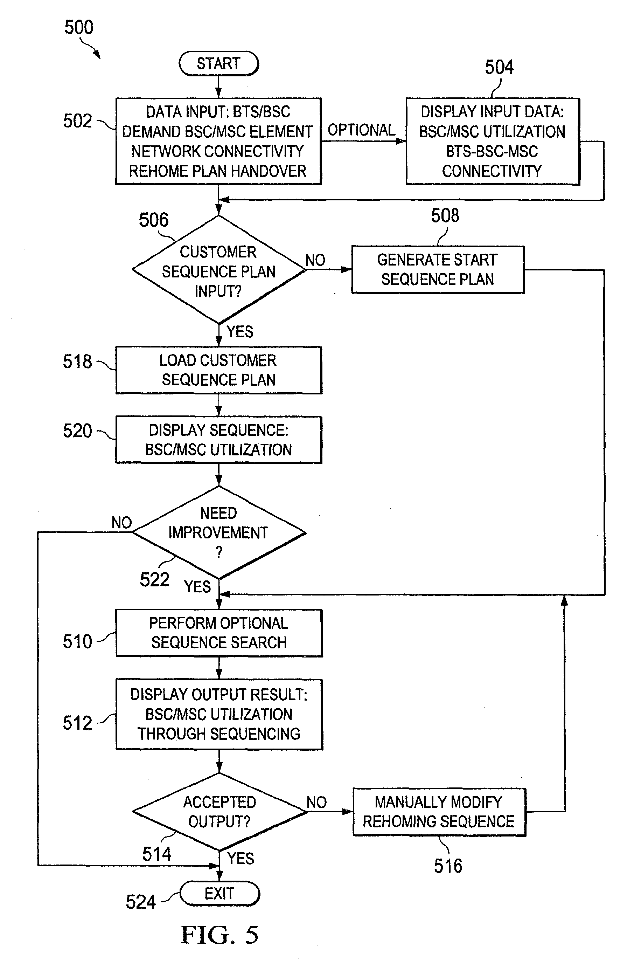

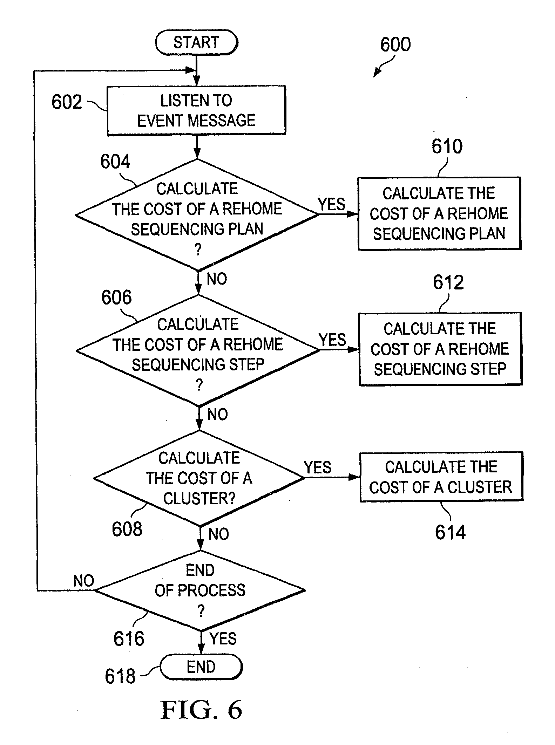

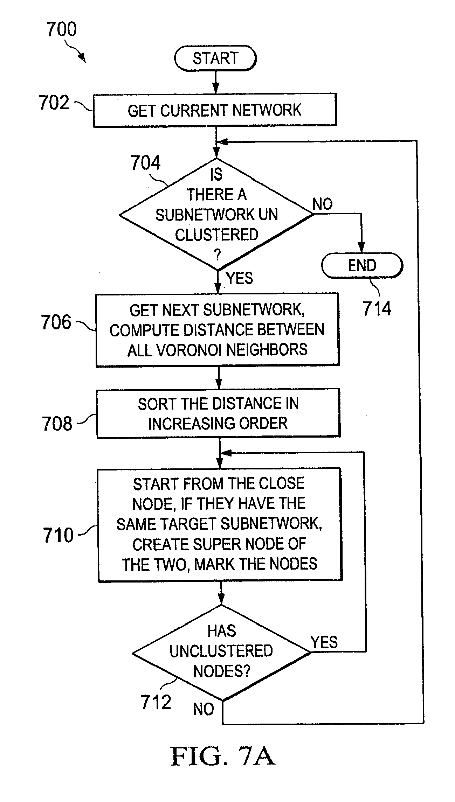

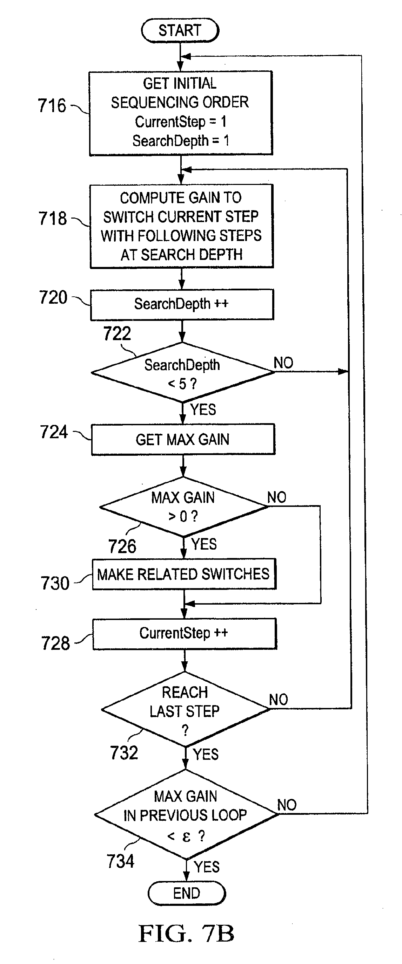

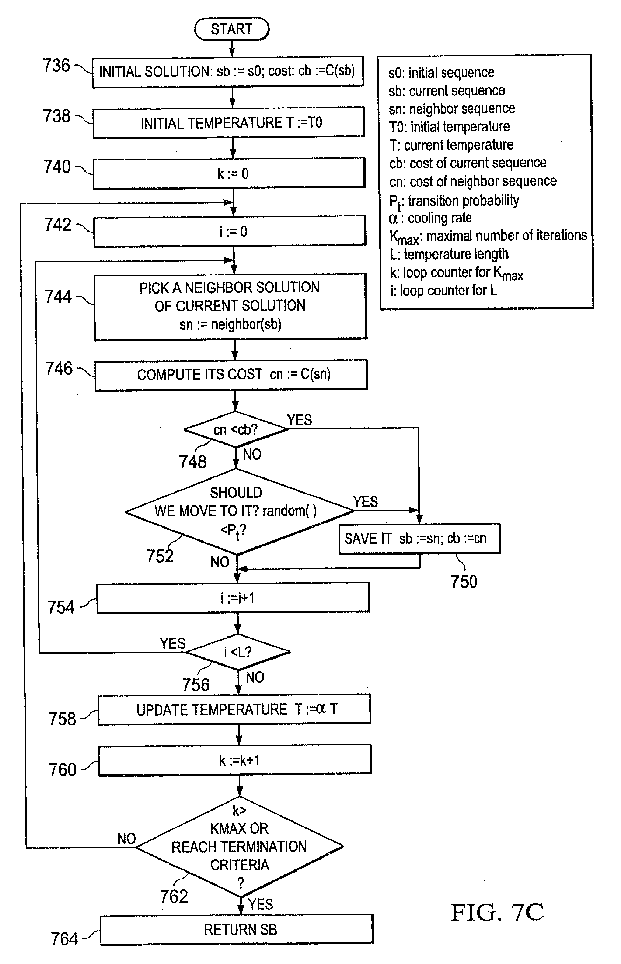

Network manager 104 reads and loads the network elements, network topologies, and network mobility measurements into an internal data structure such as lists or hash tables. Sequencing plan calculator 600, an example of which is illustrated in more detail in FIG. 6, may be called by sequencing plan manager 500, an example of which is illustrated in more detail in FIG.5, and sequencing plan optimizer 700, an example of which is illustrated in more detail in FIG. 7, to calculate the cost of each rehome sequencing step and the overall cost of the rehome sequencing plan. Sequencing plan optimizer 700 may implement optimization processes such as heuristic search, greedy search, and simulated annealing approaches to search for a rehome sequencing plan with less cost. Sequencing plan manager 500 may receive user inputs from GUI 400 and may determine which corresponding component in system 100 should be called to execute the user commands. GUI 400, an example of which is illustrated in more detail in FIG. 4, may be used to input user inputs and also to display the rehome sequencing steps in a geographical map or in a report format.

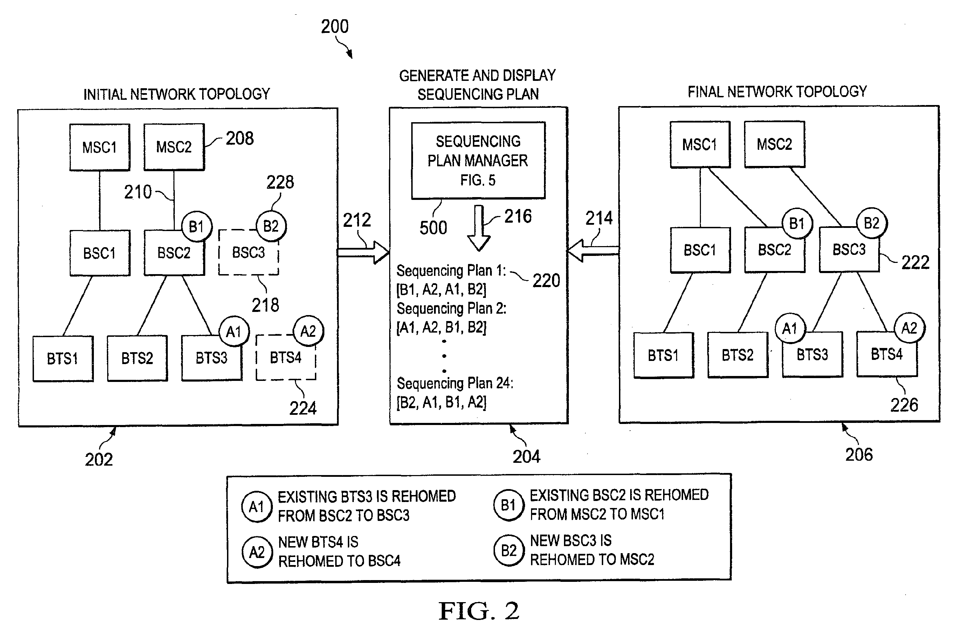

As an example of network rehoming sequence, with reference to FIG. 2, an initial network consists of BTS1 - BTS3, BSC1 - BSC2, and MSC1 - MSC2. A final network consists of BTS1 - BTS4, BSC1 - BSC3, and MSC1 - MSC2. Note that these BTSs, BSCs, and MSCs may be either from a homogenous network (e.g., all from a GSM network or all from a UMTS network) or heterogeneous networks (e.g., part from a GSM network and part from a UMTS network). As used herein, unless otherwise indicated by the context, heterogeneous networks are understood to include homogeneous networks. In this example, the network elements rehome activities from the initial network state to the final network state are:

A1: Existing BTS3 is connected to BSC3 instead of BSC2;

A2: New BTS4 is connected to BSC3;

B1: Existing BSC2 is connected to MSC1 instead of MSC2; and

B2: New BSC3 is connected to MSC2.

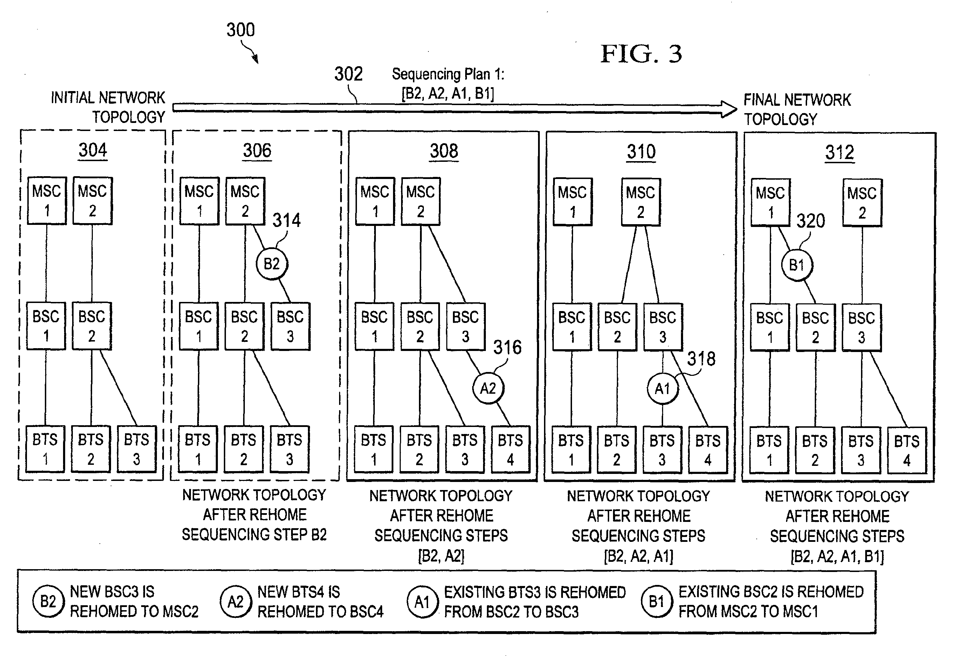

The rehome sequencing from the initial network state to the final network state is a permutation of rehome activities A1, A2, B 1, and B2. The number of permutations generally is the factorial of the number of rehome activities, and in this case, for 4 rehome activities is the factorial of 4, i.e., 4! = 4x3x2x1 = 24. Thus, in this example, there are 24 possible sequencing plans for migrating the network from the initial network state to the final network state. One possible sequencing plan is [B2, A2, A1, B1] as shown in FIG. 3, with the rehome activity B2 executed prior to A2, A2 prior to A1, and A1 prior to B1. In order to choose an optimal rehome sequencing plan, generally all these possible sequencing plans should be compared and the one with the least cost should be selected.

The cost of a rehome sequencing plan generally is not a simple summation of all costs incurred in every individual rehome sequencing step, however, because the rehome activities are correlated and a prior rehome sequencing step affects the cost of executing the subsequent rehome sequencing steps. In this example, the cost of executing rehome activity [B2, A2, A1, B1] generally is not equal to the summation of the costs incurred by executing rehome sequencing steps A1, A2, B1, and B2 separately. The overall cost and cost of network state transitions may be calculated using a unified unit, such the net present value (NPV), where the feasibility, implementation costs, network performance, network element utilization during the rehome sequencing plan, and network limits such as capacity limit, etc. are translated into such a unified unit.

One can easily imagine that, given a network transition with a large number of rehome activities, the number of possible rehome sequencing plans can be very large. The simplest but tedious and costly way to find an optimal rehome sequencing plan is to compare the costs of all possible sequencing plans. If the number of rehome activities is N, the number of possible sequencing plans is N factorial, or N!. The costs of all possible sequencing plans should be calculated in an $O(N!)$ time, and a smallest one should be chosen by comparing the costs in an $O(N! * \log(N!))$ time. The total complexity generally is $O(N!)$, which is a Non-deterministic Polynomial-time complete (NP-complete) problem; that is, the problem generally cannot be solved in a polynomial time. Obviously, such a brute-force method generally is not practically feasible. To reduce the computation complexity in finding the absolute optimal sequencing plan, processes running in a polynomial time should be used to generate a practicable optimized rehome sequencing plan. The practicable optimized rehome sequencing plan may not be absolutely optimal, but generally achieves a minimized cost that is close to the absolute minimum cost achieved by the absolute optimal rehome sequencing plan, while at the same time satisfying practical network constraints. In particular, the minimized cost of the practicable optimized rehome sequencing plan may be within 20%, preferably within 10%, or more preferably within 5%, of the global minimum cost of the absolute optimal rehome sequencing plan.

FIG. 2 further illustrates rehome sequencing plan generation as implemented on system 100 of FIG. 1. Initial network topology 202 and final network topology 206 are loaded by sequencing plan manager 500 from persistent storage 106 by calling network manager 104. Then sequencing plan manager 500 calls sequencing plan calculator 600 or sequencing plan optimizer 700 to generate feasible sequencing plans 220. Sequencing plan generation 204 includes sequencing plan manager 500 and generated sequencing plans 220. As stated hereinabove, in this example there are a total of 24 sequencing plans.

Network topologies 202 and 206 may be loaded by loading steps 212 and 214, respectively. The rehome sequencing plan may be displayed 216 to a network planner. An example of a rehome sequencing step 228, that is, the movement of the network connectivity of network elements, is shown in initial network topology 202. The four rehome steps, A1, A2, B1 and B2 are listed at the bottom of FIG. 2. Within network topology 202 or 206, the multiple network elements, such as MSC2 208, BSC3 218 and BTS4 224 are represented as rectangles. The elements are connected by connectivity links, such as connectivity link 210 connecting MSC2 and BSC2. The dotted line border of BSC3 218 and BTS4 224 in initial network topology 202 indicates that these are new network elements. The solid line border of BSC3 222 and BTS4 226 in final network topology 206 indicates that these network elements are part of final topology network 206. In rehome sequencing step B1 228, for example, BSC3 222 is added to the network and connected to MSC2, and in rehome sequencing step A2, BTS4 226 is added to the network and connected to BSC3 222. Similarly, rehome sequencing step B1 denotes that BSC2 is connected to MSC1, instead of MSC2, in the final network topology, and rehome sequencing step A1 denotes that BTS3 is connected to BSC3, instead of BSC2, in the final network topology.

With reference now to FIG. 3, there are depicted detailed rehome sequencing steps in a rehome sequencing plan 300. In FIG. 3, the sequencing plan is taken as [B2, A2, A1, B1] as an example. Initial network topology 304 is evolved to final network topology 312 through sequencing plan 302. In the first rehome sequencing step 314, a new BSC3 is added to the network and connected to MSC2, with the resulting network topology denoted as component 306. From network topology 306, a new BTS4 is added into the network and connected to BSC3 in the second rehome sequencing step 316. From network topology 308, a third network rehome sequencing step 318 is executed by rehoming an existing BTS3 from B SC2 to BSC3. Finally, network topology 310 is evolved to the final network topology 312 by rehoming existing BSC2 from MSC2 to MSC1 in the fourth rehome sequencing step 320. As can be seen in this example, each rehome sequencing step in the sequencing plan [B2, A2, A1, B1] results in a new network topology. In this example, the number of network elements manipulated in each rehome sequencing step is a single one. Embodiments of the present invention also include the movement of network elements in a cluster-wise manner, where network elements are grouped into clusters according to performance indicators such as distance, mobility traffic, and location update events between the elements.

With reference now to FIG. 4A, GUI 400 is depicted displaying a geographical representation of the network topology and its performance gauges during a rehome sequencing plan. On an upper portion of the screen, there are buttons depicting the rehome sequencing steps in an ascending order, from 1 to 5 for this example. The current selected rehome sequencing step is 5, wherein button 402 is highlighted. If the network planner clicks minus button 404, GUI 400 will display one step backward from the current one, which in this example would be rehome sequencing step 4. On the other hand, if the network planner clicks plus button 406, GUI 400 will display one step ahead of the current one, which in this example would be rehome sequencing step 6, if step 6 exists. If the total number of steps is five and step 5 is displayed, pressing button 406 would continue to show the current rehome sequencing step, i.e., step 5.

When the network planner chooses a rehome sequencing step, such as step 5 402, GUI 400 displays the geographical locations of network elements in the current network topology and specifically, the state of the network elements in the rehome sequencing plan before the execution of rehome sequencing step 5. The network elements are grouped in clusters and labeled using the corresponding sequencing number of the rehome sequencing step. For example, cluster 1 408 including, e.g., 9 BTS elements, is located in BSC1 414, which may be color coded using, e.g., a pink color and labeled by its rehome sequencing step 4, which indicates that the BTS network elements of cluster 1 are rehomed to BSC1 414 after rehome sequencing step 4. Note that each single polygon in map 412 may be color coded to represent the geographical serving area of a single BSC, and dots colored with the same color may represent the BTSs that belong to the same rehome cluster. Other BTSs not in the rehome sequencing plan may be set to be indivisible.

Another example is cluster 2 410, which may be color coded in, e.g., brown color and labeled as rehome sequencing step 7. Because the current rehome sequencing step shown is step 5 in this example, cluster 2 410 is located in the serving area of BSC2 416 prior to its rehome step. In the dashboard in the lower portion of GUI 400, utilization chart 418 shows BSC loading prior to the execution of rehome sequencing step 5. BSC utilization may be color coded so that a red color is assigned to a BSC with a higher utilization and a green color to a BSC with a lower utilization to show the level of balancing in an intuitive or qualitative manner.

Performance indictor 420 shows border performance of serving areas for the current rehome sequencing step. The border performance of serving areas is measured by the mobility traffic loading at different network elements. In this example, the handovers between BSCs or MSCs, i.e., inter-BSC handovers or inter-MSC handovers, are used to measure the border performance of serving areas. The mobility impact also may be indicated by using the location updates between BSCs or MSCs. The border performance of serving areas together with the utilization of network elements may be part of the cost function used to optimize the rehome sequencing steps, as described in detail herein below with respect to FIGS. 6 & 7.

With reference now to FIG. 4B, depicted is a graph or chart display of the performance of a rehome sequencing plan, as displayed or output by GUI 400. In this rehome sequencing plan example, there are 41 rehome sequencing steps 422. The utilization of the network elements, e.g., the BSCs, is plotted for every rehome sequencing step 422, thus providing an overview of the rehome sequencing plan. The utilization of network elements at each rehome sequencing step has the same utilization illustrated in chart 418 in FIG. 4A. As an example, the utilization of a particular BSC, e.g., B SC06 428, is shown at about 97.2 % utilization before executing the rehome sequencing step 4 426. After rehoming network elements in cluster 4 to another BSC, i.e., after executing the rehome sequencing step 4, the loading of BSC06 is dramatically dropped to below 80%.

The utilization of the rehome sequencing plan may be calculated by taking the maximum utilization across all rehome sequencing steps, which is given as 97.2% in the performance indicator 424 of the rehome sequencing plan. While the BSC utilization is used as an example for the cost function, other cost functions such as MSC utilization, inter-BSC handovers, inter-MSC handovers, inter-BSC location updates, inter-MSC location updates, and the like, also may be used as the performance indicator. Generally, the cost function may be used to show the cost for each rehome sequencing step and for the overall rehome sequencing plan, and is described in more detail herein below with respect to equation (5).

With reference now to FIG. 4C, depicted is a report display of the performance of a rehome sequencing plan, as displayed or output by GUI 400. Column 430 denotes the order of the rehome sequencing steps, wherein multiple clusters 434 may be included in a single rehome sequencing step 430. In this example, rehome cluster numbers 1 and 2 are in rehome sequencing step 1. Rehome cluster number 1 includes 10 sites and rehome cluster number 2 includes 15 sites, as shown in column 456. Therefore there are a total of 25 sites in rehome sequencing step 1. Cluster 1 is rehomed from an initial parent network element BSC3 (column 436) to the final network parent BSC1 (column 438). After rehoming cluster 1, BSC1 in column 432 becomes the network element having the highest load (column 442) with 97.2% utilization in terms of transceiver (TRX) utilization (column 446). Other utilizations, such as 94.5% sector load in column 444, 91.5% Erlang load in column 448, 92.5% busy hour call attempts (BHCA) load in column 450, 84.5% T1 load in column 452, and 84.2% packet control unit (PCU) load in column 454, are not as high as the TRX utilization in column 446. Because the maximum utilization limits the capacity of network elements, BSC 1 in column 432 is said to be constrained by the TRX in column 440.

The reports also lists the number of sites in column 456, the number of sectors in column 458, the number of TRX in column 460, the BHCA in column 462, the Erlang in column 464, the Ater T1 in column 466, Abis T1 in column 468, the number of SS7 DS0 in column 470, the number of PCU DS0 channels in column 472, and the overall cost in column 474 for each cluster. Note that the constraint element also may be an MSC as shown in column 432 for cluster 4. Generally, the rehoming of a cluster may result in loading issues at multiple layers of network elements directly or indirectly connected to it.

With reference now to FIG. 5, there is depicted a flow chart of sequencing plan manager 500. Sequencing plan manager 500 may be initiated, for example, when it receives a rehome sequencing calculation or optimization commands from GUI 400. Sequencing plan manager 500 may load the BTS, BSC, and MSC demand in terms of Sector, TRX, Erlang, BHCA, PCU, Ater T1, Abis T1, SS7 DS0, PCU DS0 channels, and the like, in step 502. Sequencing plan manager 500 also may load the mobility among network elements such as the handovers and location updates, and the network topologies such as BTS to BSC connectivity and BSC to MSC connectivity by using network manager 104. As an optional function in step 504, sequencing plan manager 500 may display the input demand, network connectivity, and utilization of network elements via GUI 400 in a manner similar to the format shown in FIG. 4A 400.

After loading the input data, sequencing plan manager 500 receives input from the network planner through GUI 400 in step 506. If the network planner has an existing network rehome sequencing plan to load, the network manager 104 may be called to load the rehome sequencing plan from persistent storage 106 in step 518 and display the existing rehome sequencing plan in a geographical map or in reports by calling rehome sequencing calculator 600 and using GUI 400 in step 520. If the initial rehome sequencing plan is not satisfactory, the network planner may choose to optimize the existing rehome sequencing plan in step 522. Otherwise, if a sequence plan is not input, a random permutation of the rehome steps or a heuristic approach may be used to generate an initial rehome sequencing plan in step 508. As an example of a heuristic initialization, a network element, e.g., a BSC, with heavier load is given higher priority in the rehoming sequence.

The optimization of an existing rehome plan or a randomly generated initial rehome sequencing plan is conducted by sequencing plan optimizer 700 in step 510. After the optimization, the optimized rehome sequencing plan may be displayed by GUI 400 in step 512. Then the network planner may be asked via GUI 400 for acceptance of the rehome sequencing plan in step 514. If the network planner chooses to accept the rehome sequencing plan, the rehome sequencing optimization process ends at block 524. Otherwise, the network planner may be allowed to use GUI 400 to manually modify the rehoming sequencing plan in step 516, which may include changing the network elements in a cluster, changing the clusters in a rehome sequencing step, changing the rehome sequencing steps in a rehome sequencing plan, and the like. When the rehome sequencing plan is finalized, the rehome sequencing plan may be implemented on the telecommunications network by executing the rehome activities in the order provided by the rehome sequencing plan.

With reference now to FIG. 6, depicted is a flow chart of sequencing plan calculator 600. Sequencing plan calculator 600 may be initiated in step 602 to listen for event messages. Sequencing plan calculator 600 may check message requests from GUI 400 to see if there is a request to calculate the cost of a rehome sequencing plan (step 604), calculate the cost of a rehome sequencing step (step 606), calculate the cost of a rehome sequencing cluster (step 608), or end the rehome sequencing process (step 616). If any of these are requested, then the corresponding modules are invoked. In particular, module 610 calculates the cost of a rehome sequencing plan, module 612 calculates the cost of a rehome sequencing step, and module 614 calculates the cost of a rehome sequencing cluster.

As an example, if sequencing plan calculator 600 is requested to calculate the cost of a rehome sequencing plan, module 610 is called. Module 610 may make one or multiple calls to module 612 to calculate the costs of all rehome sequencing steps within the rehome sequencing plan, and use the costs of these steps to determine the overall cost for the rehome sequencing plan. Likewise, module 612 may make one or multiple calls to module 614 to calculate the costs of all rehome sequencing clusters within a rehome sequencing step and use the costs of these clusters to determine the overall cost for the rehome sequencing step. As a special case, the cluster may include only one network element. In other cases, the cluster may include two, three, four, or more network elements.

The cost function may be implemented with a unified approach with all costs represented in the same units, e.g., the NPV method. The cost function of a rehome sequencing plan generally is a function of the ordered rehome sequencing steps in the plan. As an example, a rehome sequencing plan denoted as P is represented as:

$$P = [S_{P1}, S_{P2}, \cdots, S_{Pn}, \cdots, S_{PN}], \qquad (1)$$

where $S_{Pn}$ is the $n^{th}$ rehome sequencing step in the rehome sequencing plan $P$. The cost function C(P) of the rehome sequencing plan P is represented as:

$$C(P) = f_P(C(S_{P1}), C(S_{P2}), \cdots, C(S_{Pn}), \cdots, C(S_{PN})), \qquad (2)$$

Where $f_p(\ )$ is a linear or non-linear function and $C(S_{Pn})$ is the cost function of the $n^{th}$ rehome sequencing step in the rehome sequencing plan $P$. If $f_P$ is a linear function, the average of the cost function $C(P)$ in equation (2) can be expressed as:

$$C_{avg}(P) = \underset{n=1\cdots N}{avg} \{w(S_{Pn}) \times C(S_{Pn})\}, \qquad (3)$$

where $avg\{w(S_{Pn})C(S_{Pn})\}$ is the average value taken over all $w(S_{Pn}) \times C(S_{Pn}), 1 \le n \le N$ and where $n=1...N$ $w(S_{Pn})$ is the weight function of the $n^{th}$ rehome sequencing step in the rehome sequencing plan $P$. If $f_P$ is a non-linear function, the maximum of the cost function of C(P) in equation (2) can be expressed as:

$$C_{max}(P) = \underset{n=1\cdots N}{\max} \{w(S_{Pn}) \times C(S_{Pn})\}, \qquad (4)$$

where $\max\limits_{n=1\cdots N}\{w(S_{Pn})C(S_{Pn})\}$ is the peak value taken over all $w(S_{Pn}) \times C(S_{Pn})$, $1 \leq n \leq N$.

The cost function C(P) can be expressed as a weighed sum of the maximum and average cost function as:

$$C(P) = w_{max}(P)C_{max}(P) + w_{avg}(P)C_{avg}(P), \qquad (5)$$

and $w_{max}(P)+w_{avg}(P)=1$.

If the NPV method is used, the weight $w(S_{Pn})$ can be expressed as $w(S_{Pn}) = (1+r)^{-TPn}$, where r is the compounded monthly rate of return, and $TPn$ is the number of months between the month of executing the $n^{th}$ rehome sequencing step and the month of executing the first rehome sequencing step in the rehome sequencing plan P. The daily or yearly rate of return may also be used to calculate the NPV.

$C(S_{Pn})$ is the cost function of the $n^{th}$ rehome sequencing step in rehome sequencing plan P , which can be expressed as:

$$C(S_{Pn}) = w_{load}C_{load}(S_{Pn}) + w_{HO}C_{HO}(S_{Pn}). \qquad (6)$$

where

$$w_{load} + w_{HO} = 1. \qquad (7)$$

In equation (6) above, $C_{load}(S_{Pn})$ is the capital and operational cost of executing a rehome step $S_{Pn}$, determined by using the maximum utilization of every network element in terms of Sector, TRX, Erlang, BHCA, PCU, Ater T1, Abis T1, SS7 DS0, and PCU DS0 utilizations. An example of expressing the utilization may be in a format similar to that shown in FIG. 4. $C_{HO}(S_{Pn})$ is the revenue generated by executing the rehome step $S_{Pn}$ by using the border performance measured in terms of inter-element mobility such as inter-BSC and inter-MSC handovers.

The cost difference between two rehome sequencing plans P and Q is defined as:

$$\Delta C(P-Q) = C(P) - C(Q). \qquad (8)$$

If $\Delta C(P - Q) < 0$, i.e., $C(P) < C(Q)$, the rehome sequencing plan P is better than the rehome sequencing plan Q in terms of less cost. If $\Delta C(P-Q) \geq 0$, i.e., $C(P) \geq C(Q)$, the rehome sequencing plan Q is better than the rehome sequencing plan P in terms of less cost.

Similar to the calculation of the cost function of $C(S_{Pn})$, the cost function of a cluster is a weighed sum of the maximum utilization of every network element in the cluster after the rehoming of the cluster in terms of Sector, TRX, Erlang, BHCA, PCU, Ater T1, Abis T1, SS7 DS0, and PCU DS0 utilizations and the border performance measured in terms of inter-element mobility such as inter-BSC and inter-MSC handovers.

With reference now to FIG. 7A, depicted is a flow chart of a cluster generation process. Sequencing plan optimizer 700 may be used to cluster network elements to be rehomed and reduce the cost of an initial rehome sequencing plan. Cluster generation may be the first step in rehome sequencing plan optimization. An example of a rule of thumb for clustering is to group adjacent network elements together.

The network planner usually groups adjacent sites with the same target sub-network in one cluster and rehomes them together. A Voronoi triangulate diagram may be selected to generate the neighbor relationship among all rehome sites. Based on the relationship, network nodes may be merged into super nodes. A high level network may be generated, which is composed of the super nodes. Each Voronoi triangle may be broken into three neighbor pairs. To set up the neighbor relationship, a list with unique neighbor pairs may be generated and saved in the network object. A walk through the list may add the specified neighbors. To record the information, each node may need a new neighbor list. The list may be different from the original neighbor list, which is based on the handover inputs and may be used in calculating handovers between sub-networks.

To generate a high level network composed of clusters, the distance between all adjacent site pairs as indicated by the Voronoi neighbor relationship may be calculated. If two nodes belonging to the same sub-network, have the same target sub-network and the closest distance, a super node composed of the two nodes may be created. Super nodes of super nodes may continue to be built, until there is only one super node (or cluster) for every rehome target sub-network. Next, a search is performed on the highest level for an optimal sequencing order. If no satisfactory solution is found at a higher level, the reverse may be performed to unpack the super nodes layer by layer back to the original network to find a solution. If the original network is reached, that generally indicates that only one site may be rehomed at each step, which generally is very unlikely to happen.

Referring now back to FIG. 7A, the current network topology is loaded in step 702. A group of network elements, such as a BSC, may be treated as a sub-network. Some of the network elements such as BTSs in a sub-network (e.g., the initial BSC), are going to be rehomed to a target sub-network (e.g., a target BSC), while other network elements are going to be rehomed to another target sub-network, with the rest of the network elements left in the original sub-network. If there is a sub-network that is not clustered (step 704), the sub-network is loaded and the Voronoi neighbor elements are constructed for all network elements in the sub-network (step 706) and the distance is sorted in an ascending order (step 708). Then the nearby nodes to be rehomed to a target sub-network are grouped together to create the super node (step 710). After all nodes in a sub-network have been clustered (step 712), the next sub-network is clustered. After clustering all the sub-networks, the clustering process ends (step 714).

With reference now to FIG. 7B, depicted is a flow chart of a greedy search process for optimizing an existing rehome sequencing plan. The greedy search process generally attempts to achieve gain at each rehome move until no more gain can be found. In this embodiment, the greedy search process may accept a negative gain for intermediate moves as long as the final gain is positive. This feature may increase the searching space and may help to jump out from local minima.

The greedy search process first obtains the initial sequence in step 716. Starting from the first rehome sequencing step, the gain is computed and the maximum gain is attempted to be found in step 718. In step 720, to increase the search space, multiple continuous switches may be made as long as the overall gain is positive. To reduce the computation cost, the search space may be limited by a maximum number of rehome sequencing steps in a search, for example to less than five as shown in step 722. In that case, only a factorial of 5, i.e., 5! =120 rehome sequencing steps need to be searched in a search iteration, which significantly reduces the computation complexity. The maximum gain for these five rehome sequencing steps is found in step 724. If the maximum gain is greater than 0 (step 726), the five rehome sequencing steps are accepted in step 730. Otherwise, step 728 searches again until the search of all five rehome sequencing steps is finished (step 732). If the maximum gain between two searches is less than a small value, e.g. 0.01%, then the search may be stopped and the rehome sequencing plan may be output in step 734. Otherwise, another search is conducted returning back to step 716.

With reference now to FIG. 7C, depicted is a flow chart of a simulated annealing process for optimizing an existing rehome sequencing plan. Simulated annealing is a global optimization process, the initial inspiration for which came from the annealing technique involving heating and controlled cooling of a material to increase the size of its crystals and reduce their defects. Generally, in simulated annealing, some worse sequences are allowed, but the frequency of accepting a worse sequence gradually decreases as the method proceeds, until finally only better sequences are allowed. Therefore, this process generally includes three procedures: (1) accepting a better rehome sequence; (2) accepting a worse sequence with probability, which may help prevent the method from becoming stuck in a local optimum; and (3) gradually decreasing the temperature to reduce the probability of accepting a worse sequence in terms of cooling schedule. The terminology "temperature" is derived from the physical process of annealing by analogy. It is a parameter that controls the probability of accepting a worse sequence. A simulated annealing process generally has a guaranteed convergence to a global optimal solution with probability one as the number of search iterations goes to infinity. For a limited number of iterations, the process converges to a global optimal solution with a probability approaching one.

Referring again to the simulated anneal process flow chart shown in FIG. 7C, the initial sequencing s0 may be generated using a heuristic initialization or a random initialization and may be called the current rehome sequencing sb (step 736). The cost C(sb) of current rehome sequencing plan sb may be calculated by using equation (5) above. The initial temperature T may be set to T0 in step 738. The current search iteration of the SA process k (step 740) has a maximum number $K_{max}$. In each iteration, the temperature T is divided into L equal intervals, with the current step i representing the $i^{th}$ interval (step 742).

A neighbor rehome sequencing plan sn is generated from current rehome sequencing sb in step 744 for each rehome sequencing step. A neighboring sequence is generated through the modification of the current sequence. One modification mechanism is to randomly exchange the order of two rehome sequencing steps in the sequence. The cost of the neighbor rehome sequencing plan C(sn), determined according to equation (5) in step 746, is compared to the cost of current rehome sequencing plan C(sb) in step 748. A comparison of the two rehome sequencing plans sn and sb in terms of the cost function is defined in equation (8) and given by $\Delta C = C(sn) - C(sb)$. If the neighbor rehome sequencing plan sn is better than the current rehome sequencing plan sb, i.e., $\Delta C < 0$, the neighbor sequence sn is accepted unconditionally in step 750. Otherwise, the neighbor sequence sn is accepted with probability $P_t = e^{-\Delta C/T}$ in step 752.

After this the temperature is increased in step 754 until maximum step L is reached (step 756). Then the temperature T is raised by $\alpha$ times in step 758. The process continues to the next iteration of k (step 760) until the maximum number of iteration $K_{max}$ or other termination criteria are reached (step 762). The other termination criteria may include the scenario when there is no significant increase of the cost function for several iterations. The optimized rehome sequencing is output in step 764. The simulated annealing process also may set the value of $\alpha$ to be less than one in order to cool down the temperature to search.

Although the present invention and its advantages have been described in detail, it should be understood that various changes, substitutions and alterations can be made herein without departing from the scope of the invention as defined by the appended claims. For example, many of the features and functions discussed above may be implemented in computer program code as software, hardware, or firmware, or a combination thereof. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

**Claims**

1. A method of generating a rehome plan (220) for a telecommunications network, the method comprising:

   inputting an initial topology (202) of network elements for the telecommunications network (502);
   generating an initial rehome plan for rehoming selected network elements of the telecommunications network from the initial topology (202) to a final topology (206) of network elements (508);
   modifying an order of rehome steps in the initial rehome plan (708) to generate a practicable optimized rehome plan incurring minimized cost (748); and
   implementing the practicable optimized rehome plan on the telecommunications network.

2. The method of claim 1, wherein the modifying the order of the rehome steps comprises one of a simulated annealing process, a greedy search process, and a heuristic search process to generate the practicable optimized rehome plan.

3. The method of claim 1, wherein the minimized cost incurred by the optimized rehome plan comprises minimized overall utilization of the network elements and inter-element mobility traffic.

4. The method of claim 3, wherein the utilization of the network elements comprises a utilization selected from the group consisting of: sector load, transceiver utilization, Erlang load, busy hour call attempts load, packet control unit load, T1 load, DS0 channel utilization, and combinations thereof; and
   wherein the inter-element mobility traffic comprises inter-element handovers and inter-element location updates.

5. The method of claim 1, wherein, after each rehome step, the cost incurred by the rehome step is calculated and expressed as a net present value.

6. The method of claim 1, wherein the generating the initial rehome plan comprises inputting the initial rehome plan, the method further comprising inputting the final topology.

7. The method of claim 1, wherein the generating the initial rehome plan comprises using a random permutation or heuristic selection of the rehome steps to create the initial rehome plan.

8. The method of claim 1, further comprising, before the modifying the order of the rehome steps, clustering adjacent network elements into rehome clusters such that the adjacent network elements are grouped into one of the rehome steps.

9. The method of claim 8, wherein adjacency of the network elements is determined by geographic distance or inter-element mobility traffic.

10. The method of claim 8, wherein there is only one of the network elements in each of the rehome clusters.

11. The method of claim 8, further comprising combining adjacent ones of the rehome clusters into one of the rehome steps.

12. The method of claim 1, wherein the modifying the order of rehome steps further comprises comparing at least two intermediate rehome plans by determining a difference in their respective incurred costs, and the generating the practicable optimized rehome plan further comprises selecting the intermediate rehome plan with a lowest relative cost incurred.

13. A system for generating a practicable optimized rehome plan (220) for a telecommunications network, the system comprising:

a sequencing plan manager (500) configured to generate rehome plans for rehoming selected network elements of the telecommunications network from an initial network element topology (202) to a final network element topology (206),
a sequencing plan optimizer (700) configured to search for the practicable optimized rehome plan for the telecommunications network by modifying the order of rehome steps to generate the practicable optimized rehome plan (708);
a sequencing plan calculator (600) configured, when being called by the sequencing plan manager and/or by the sequencing plan optimizer, to determine costs incurred by the rehome plans (746);
a persistent storage (106) for storing data about network element topologies, network elements, and network mobility information;
a network manager configured to retrieve the data from persistent storage and format the data into data structures usable by the sequencing plan manager (500), the sequencing plan optimizer (700) and the sequencing plan calculator (600); and
a graphical user interface (400) for interacting with a user of the system; and
communication links (102) connecting the sequencing plan manager (500), the sequencing plan optimizer (700), the sequencing plan calculator (600), the network manager (104), the persistent storage (106) and the graphical user interface (400) with one another.

14. The system of claim 13, wherein the graphical user interface is configured to display the rehome plan either:

in a series of geographical maps, and wherein the graphical user interface is configured to receive input from the system user to manually re-cluster network elements in a cluster, re-group clusters in rehome steps, and re-order rehome steps in the rehome plan; or
in a graph or report format showing costs incurred by network elements and by a utilization of network elements for each rehome step in the rehome plan.

15. A computer program product for generating a rehome plan (220) for a telecommunications network, the computer program product comprising:

computer program code for inputting an initial topology of network elements for the telecommunications network (502);
computer program code for generating an initial rehome plan for rehoming selected network elements of the telecommunications network from the initial topology (202) to a final topology (206) of network elements (508);
computer program code for modifying an order of rehome steps in the initial rehome plan (708) to generate a practicable optimized rehome plan incurring minimized cost (748), and
computer program code for implementing the practicable optimized rehome plan on the telecommunications network.

**Patentansprüche**

1. Verfahren zum Generieren eines Wiederunterbringungsplans (220) für ein Telekommunikationsnetz, wobei das Verfahren umfasst:

Eingeben einer Ausgangstopologie (202) von Netzelementen für das Telekommunikationsnetz (502);
Generieren eines Ausgangswiederunterbringungsplans, um ausgewählte Netzelemente des Telekommunikationsnetzes aus der Ausgangstopologie (202) wieder in einer endgültigen Topologie (206) von Netzelementen (508) unterzubringen;

Modifizieren einer Reihenfolge von Wiederunterbringungsschritten im Ausgangswiederunterbringungsplan (708), um einen praktikablen, optimierten Wiederunterbringungsplan zu minimierten anfallenden Kosten zu generieren (748); und

Implementieren des praktikablen, optimierten Wiederunterbringungsplans im Telekommunikationsnetz.

2. Verfahren nach Anspruch 1, wobei das Modifizieren der Reihenfolge von Wiederunterbringungsschritten einen simulierten vergütenden Prozess, einen metaheuristischen Suchprozess oder einen heuristischen Suchprozess umfasst, um den praktikablen, optimierten Wiederunterbringungsplan zu generieren.

3. Verfahren nach Anspruch 1, wobei die minimierten, durch den optimierten Wiederunterbringungsplan anfallenden Kosten eine minimierte Gesamtnutzung der Netzelemente und des Interelementmobilitätsverkehrs umfassen.

4. Verfahren nach Anspruch 3, wobei die Nutzung der Netzelemente eine Nutzung umfasst, die aus der Gruppe ausgewählt ist, die besteht aus: Sektorauslastung, Sender/Empfänger-Nutzung, Erlang-Auslastung, Hauptverkehrsstundenanrufsversuchsauslastung, Paketsteuereinheitsauslastung, T1-Auslastung, DS0-Kanalnutzung und Kombinationen von diesen; und

wobei der Interelementmobilitätsverkehr Interelementübergaben und Interelementstandortaktualisierungen umfasst.

5. Verfahren nach Anspruch 1, wobei nach jedem Wiederunterbringungsschritt die durch den Wiederunterbringungsschritt anfallenden Kosten berechnet und als ein Nettobarwert ausgedrückt werden.

6. Verfahren nach Anspruch 1, wobei das Generieren des Ausgangswiederunterbringungsplans umfasst, den Ausgangswiederunterbringungsplan einzugeben, wobei das Verfahren darüber hinaus umfasst, die endgültige Topologie einzugeben.

7. Verfahren nach Anspruch 1, wobei das Generieren des Ausgangswiederunterbringungsplans umfasst, eine Zufallspermutation oder heuristische Auswahl der Wiederunterbringungsschritte zu verwenden, um den Ausgangswiederunterbringungsplan zu erstellen.

8. Verfahren nach Anspruch 1, darüber hinaus umfassend, vor dem Modifizieren der Reihenfolge von Wiederunterbringungsschritten, benachbarte Netzelemente zu WiederunterbringungsClustern so zusammenzufassen, dass die benachbarten Netzelemente in einem der Wiederunterbringungsschritte gruppiert sind.

9. Verfahren nach Anspruch 8, wobei die Nachbarschaft der Netzelemente durch einen geografischen Abstand oder Interelementmobilitätsverkehr bestimmt wird.

10. Verfahren nach Anspruch 8, wobei nur eines der Netzelemente in jedem der Wiederunterbringungs-Cluster vorhanden ist.

11. Verfahren nach Anspruch 8, darüber hinaus umfassend, benachbarte der Wiederunterbringungs-Cluster in einem der Wiederunterbringungsschritte zu kombinieren.

12. Verfahren nach Anspruch 1, wobei das Modifizieren der Reihenfolge von Wiederunterbringungsschritten darüber hinaus umfasst, mindestens zwei Zwischenwiederunterbringungspläne zu vergleichen, indem ein Unterschied in deren jeweiligen anfallenden Kosten bestimmt wird, und das Generieren des praktikablen, optimierten Wiederunterbringungsplans darüber hinaus umfasst, den Zwischenwiederunterbringungsplan mit den niedrigsten anfallenden relativen Kosten zu wählen.

13. System zum Generieren eines praktikablen, optimierten Wiederunterbringungsplans (220) für ein Telekommunikationsnetz, wobei das System umfasst:

einen Ablaufplan-Manager (500), der dazu eingerichtet ist, Wiederunterbringungspläne zu generieren, um ausgewählte Netzelemente des Telekommunikationsnetzes aus einer Ausgangstopologie (202) von Netzelementen wieder in einer endgültigen Netzelementtopologie (206) unterzubringen;

einen Ablaufplan-Optimierer (700), der dazu eingerichtet ist, nach dem praktikablen, optimierten Wiederunterbringungsplan für das Telekommunikationsnetz durch Modifizieren der Reihenfolge von Wiederunterbringungsschritten zu suchen, um den praktikablen, optimierten Wiederunterbringungsplan zu generieren (708);
einen Ablaufplan-Berechner (600), der dazu eingerichtet ist, bei Aufruf durch den Ablaufplan-Manager und/oder den Ablaufplan-Optimierer, durch die Wiederunterbringungspläne anfallende Kosten zu bestimmen (746);
einen permanenten Speicher (106) zum Speichern von Daten über Netzelementtopologien, Netzelemente, und Netzmobilitätsinformationen;
einen Netz-Manager, der dazu eingerichtet ist, die Daten aus dem permanenten Speicher abzurufen und die Daten zu Datenstrukturen zu formatieren, die durch den Ablaufplan-Manager (500), den Ablaufplan-Optimierer (700) und den Ablaufplan-Berechner (600) verwertbar sind; und
eine grafische Benutzeroberfläche (400) zur Interaktion mit einem Benutzer des Systems; und
Kommunikationsverbindungen (102), die den Ablaufplan-Manager (500), den Ablaufplan-Optimierer (700), den Ablaufplan-Berechner (600), den Netz-Manager (104), den permanenten Speicher (106) und die grafische Benutzeroberfläche (400) miteinander verbinden.

**14.** System nach Anspruch 13, wobei die grafische Benutzeroberfläche dazu eingerichtet ist, den Wiederunterbringungsplan anzuzeigen entweder:

in einer Reihe von geografischen Abbildungen, und wobei die grafische Benutzeroberfläche zur Aufnahme von Eingaben vom Systembenutzer eingerichtet ist, um Netzelemente manuell neu in einem Cluster zusammenzufassen, Cluster in Wiederunterbringungsschritten neu zu gruppieren und Wiederunterbringungsschritte im Wiederunterbringungsplan neu zu ordnen; oder
in einem Grafik- oder Berichtsformat, das Kosten zeigt, die durch Netzelemente und eine Nutzung der Netzelemente für jeden Wiederunterbringungsschritt im Wiederunterbringungsplan anfallen.

**15.** Computerprogrammprodukt zum Generieren eines Wiederunterbringungsplans (220) für ein Telekommunikationsnetz, wobei das Computerprogrammprodukt umfasst:

einen Computerprogrammcode zur Eingabe einer Ausgangstopologie von Netzelementen für das Telekommunikationsnetz (502);
einen Computerprogrammcode zum Generieren eines Ausgangswiederunterbringungsplans, um ausgewählte Netzelemente des Telekommunikationsnetzes aus der Ausgangstopologie (202) wieder in einer endgültigen Topologie (206) von Netzelementen (508) unterzubringen;
einen Computerprogrammcode zum Modifizieren einer Reihenfolge von Wiederunterbringungsschritten im Ausgangswiederunterbringungsplan (708), um einen praktikablen, optimierten Wiederunterbringungsplan zu minimierten anfallenden Kosten zu generieren (748); und
einen Computerprogrammcode zum Implementieren des praktikablen, optimierten Wiederunterbringungsplans im Telekommunikationsnetz.

**Revendications**

**1.** Procédé permettant de générer un plan de réhébergement (220) pour un réseau de télécommunication, le procédé comprenant :

la saisie d'une topologie initiale (202) d'éléments de réseau pour le réseau de télécommunication (502) ;
le fait de générer un plan de réhébergement initial destiné à réhéberger des éléments de réseau sélectionnés du réseau de télécommunication depuis la topologie initiale (202) vers une topologie finale (206) d'éléments de réseau (508) ;
la modification d'un ordre d'étapes de réhébergement dans le plan de réhébergement initial (708) pour générer un plan de réhébergement optimisé praticable occasionnant des coûts minimisés (748) ; et
l'implémentation du plan de réhébergement optimisé praticable sur le réseau de télécommunication.

**2.** Le procédé de la revendication 1, dans lequel la modification de l'ordre des étapes de réhébergement comprend l'un d'un procédé de recuit simulé, d'un procédé de recherche gourmande, et d'un procédé de recherche heuristique pour générer le plan de réhébergement optimisé praticable.

**3.** Le procédé de la revendication 1, dans lequel les coûts minimisés occasionné par le plan de réhébergement optimisé comprennent une utilisation globale minimisée des éléments de réseau et un trafic à mobilité inter-éléments.

**4.** Le procédé de la revendication 3, dans lequel l'utilisation des éléments de réseau comprend une utilisation sélectionnée dans le groupe constitué par : charge de secteur, utilisateur de transcepteur, charge d'Erlang, charge de tentatives d'appel à l'heure chargée, charge d'unité de commande de paquet, charge T1, utilisation de canal DS0, et leurs combinaisons ; et
dans lequel le trafic à mobilité inter-éléments comprend des transferts inter-éléments et des mises à jour d'emplacement inter-éléments.

**5.** Le procédé de la revendication 1, dans lequel, après chaque étape de réhébergement, les coûts occasionnés par l'étape de réhébergement sont calculés et exprimés comme valeur présente nette.

**6.** Le procédé de la revendication 1, dans lequel le fait de générer le plan de réhébergement initial comprend la saisie du plan de réhébergement initial, le procédé comprenant en outre la saisie de la topologie finale.

**7.** Le procédé de la revendication 1, dans lequel le fait de générer le plan de réhébergement initial comprend l'utilisation d'une permutation aléatoire ou d'une sélection heuristique des étapes de réhébergement pour créer le plan de réhébergement initial.

**8.** Le procédé de la revendication 1, comprenant en outre, avant la modification de l'ordre des étapes de réhébergement, la mise en grappes d'éléments de réseau contigus dans des grappes de réhébergement de telle sorte que les éléments de réseau contigus soient groupés en une des étapes de réhébergement.

**9.** Le procédé de la revendication 8, dans lequel la contiguïté des éléments de réseau est déterminée par la distance géographique ou le trafic à mobilité inter-éléments.

**10.** Le procédé de la revendication 8, dans lequel il y a un seul des éléments de réseau dans chacune des grappes de réhébergement.

**11.** Le procédé de la revendication 8, comprenant en outre la combinaison de grappes contiguës des grappes de réhébergement en une des étapes de réhébergement.

**12.** Le procédé de la revendication 1, dans lequel la modification de l'ordre des étapes de réhébergement comprend en outre la comparaison d'au moins deux plans de réhébergement intermédiaires par détermination d'une différence dans leurs coûts occasionnés respectifs, et le fait de générer le plan de réhébergement optimisé praticable comprend en outre la sélection du plan de réhébergement intermédiaire ayant des coûts relatifs occasionnés les plus bas.

**13.** Système permettant de générer un plan de réhébergement optimisé praticable (220) pour un réseau de télécommunication, le système comprenant :

un gestionnaire de plan de séquencement (500) configuré pour générer des plans de réhébergement destinés à réhéberger des éléments de réseau sélectionnés du réseau de télécommunication depuis une topologie d'éléments de réseau initiale (202) vers une topologie d'éléments de réseau finale (206) ;
un optimisateur de plan de séquencement (700) configuré pour rechercher le plan de réhébergement optimisé praticable pour le réseau de télécommunication en modifiant l'ordre des étapes de réhébergement pour générer le plan de réhébergement optimisé praticable (708) ;
un calculateur de plan de séquencement (600) configuré, lorsqu'il est appelé par le gestionnaire de plan de séquencement et/ou par l'optimisateur de plan de séquencement, pour déterminer des coûts occasionnés par les plans de réhébergement (746) ;
une mémoire permanente (106) destinée à stocker des données sur des topologies d'éléments de réseau, des éléments de réseau, et des informations de mobilité de réseau ;
un gestionnaire de réseau configuré pour récupérer les données à partir de la mémoire permanente et formater les données en structures de données utilisables par le gestionnaire de plan de séquencement (500), l'optimisateur de plan de séquencement (700) et le calculateur de plan de séquencement (600) ; et
une interface utilisateur graphique (400) destinée à interagir avec un utilisateur du système ; et
des liens de communication (102) connectant le gestionnaire de plan de séquencement (500), l'optimisateur de plan de séquencement (700), le calculateur de plan de séquencement (600), le gestionnaire de réseau (104), la mémoire permanente (106) et l'interface utilisateur graphique (400) entre eux.

**14.** Le système de la revendication 13, dans lequel l'interface utilisateur graphique est configurée pour afficher le plan de réhébergement soit :

dans une série de cartes géographiques, et dans lequel l'interface utilisateur graphique est configurée pour recevoir une saisie de la part de l'utilisateur de système pour remettre en grappe manuellement des éléments de réseau dans une grappe, regrouper des grappes en étapes de réhébergement, et réordonner des étapes de réhébergement dans le plan de réhébergement ; soit
dans un format de graphique ou de rapport montrant des coûts occasionnés par des éléments de réseau et par une utilisation d'éléments de réseau pour chaque étape de réhébergement dans le plan de réhébergement.

**15.** Produit de programme informatique destiné à générer un plan de réhébergement (220) pour un réseau de télécommunication, le produit de programme informatique comprenant :

un code de programme informatique pour saisir une topologie initiale d'éléments de réseau pour le réseau de télécommunication (502) ;
un code de programme informatique pour générer un plan de réhébergement initial destiné à réhéberger des éléments de réseau sélectionnés du réseau de télécommunication depuis la topologie initiale (202) vers une topologie finale (206) d'éléments de réseau (508) ;
un code de programme informatique pour modifier un ordre d'étapes de réhébergement dans le plan de réhébergement initial (708) pour générer un plan de réhébergement optimisé praticable occasionnant des coûts minimisés (748) ; et
un code de programme informatique pour implémenter le plan de réhébergement optimisé praticable sur le réseau de télécommunication.

100

104

106

400

NETWORK
MANAGER

PERSISTENCE
STORAGE

GRAPHICAL
USER INTERFACE
FIG. 4

COMMUNICATION
LINKS

102

SEQUENCING
PLAN MANAGER
FIG. 5

SEQUENCING PLAN
CALCULATOR
FIG. 6

SEQUENCING
PLAN OPTIMIZER
FIG. 7

500

600

700

FIG. 1

FIG. 2

FIG. 3

Sequencing Plan 1:
[B2, A2, A1, B1]

INITIAL NETWORK TOPOLOGY → FINAL NETWORK TOPOLOGY

304 | 306 | 308 | 310 | 312

NETWORK TOPOLOGY AFTER REHOME SEQUENCING STEP B2

NETWORK TOPOLOGY AFTER REHOME SEQUENCING STEPS [B2, A2]

NETWORK TOPOLOGY AFTER REHOME SEQUENCING STEPS [B2, A2, A1]

NETWORK TOPOLOGY AFTER REHOME SEQUENCING STEPS [B2, A2, A1, B1]

(B2) NEW BSC3 IS REHOMED TO MSC2

(A2) NEW BTS4 IS REHOMED TO BSC4

(A1) EXISTING BTS3 IS REHOMED FROM BSC2 TO BSC3

(B1) EXISTING BSC2 IS REHOMED FROM MSC2 TO MSC1

EP 2 082 537 B1

FIG. 4A

**400**

**402** **404** **CLUSTER 1 408**

Sequencing

STEP  − 1 2 3 4 5 +  — 406      412      414      Help

BSC1

20× TURQUOISE
2○ LIME
3□ BLUE
4△ MAGENTA
5◇ YELLOW
6+CYAN
7●RED
8■GREEN
18▲TEAL
19◆BROWN
20×TURQUOISE
33◎GRAY
36▣OLIVE
39▲BLUE
40◈PURPLE

GRAY
ORANGE
RED
BROWN
PINK
GREEN
BLUE
OLIVE
TEAL
YELLOW
PURPLE
DARK BLUE

410
CLUSTER 2      416

BSC2

BSC1 BSC2      418
UTILIZATION (%)
100%
50%
0%
R R R R G R G R G R G G G G R

420 — Mobility Performance: Inter-BSC Handovers: 1000 K      Inter-MSC Handovers: 200 K

EP 2 082 537 B1

| | | | | | | | | | | |
|---|---|---|---|---|---|---|---|---|---|---|
| 430 | 432 | 434 | 436 | 438 | 440 | 442 | 444 | 446 | 448 | 450 |
| STEP | CONSTRAINT ELEMENT | REHOME CLUSTER NUMBER | INITIAL PARENT ELEMENT | FINAL PARENT ELEMENT | CONSTRAINT BY | MAXIMUM ELEMENT LOAD | ELEMENT SECTOR LOAD | ELEMENT TRX LOAD | ELEMENT ERLANG LOAD | ELEMENT BHCA LOAD |
| 1 | BSC1 | 1 | BSC3 | BSC1 | TRX | 97.2% | 94.5% | 97.2% | 91.5% | 92.5% |
| 1 | BSC2 | 2 | BSC3 | BSC2 | TRX | 95.0% | 93.3% | 95.0% | 90.6% | 85.7% |
| 2 | BSC3 | 3 | BSC1 | BSC3 | T1 | 92.0% | 88.4% | 89.1% | 90.6% | 91.0% |
| 2 | MSC1 | 4 | MSC2 | MSC1 | BHCA | 87.0% | 81.2% | 79.3% | 85.8% | 87.0% |
| 2 | MSC2 | 5 | MSC1 | MSC2 | T1 | 90.0% | 67.0% | 85.0% | 83.4% | 76.8% |
| 3 | BSC2 | 6 | BSC1 | BSC2 | TRX | 85.0% | 81.0% | 85.0% | 83.4% | 68.9% |
| 3 | BSC2 | 7 | BSC3 | BSC2 | TRX | 78.0% | 72.0% | 78.0% | 69.0% | 59.0% |
| 3 | BSC3 | 8 | BSC1 | BSC3 | T1 | 82.0% | 76.0% | 79.0% | 58.0% | 69.0% |
| 4 | MSC2 | 9 | BSC1 | MSC2 | ERLANG | 72.0% | 55.0% | 67.0% | 72.0% | 66.0% |
| 4 | BSC1 | 10 | BSC2 | BSC1 | SECTOR | 75.0% | 75.0% | 70.0% | 59.0% | 71.0% |

FIG. 4C-1

EP 2 082 537 B1

| | 452 | 454 | 456 | 458 | 460 | 462 | 464 | 466 | 468 | 470 | 472 | 474 |
|---|---|---|---|---|---|---|---|---|---|---|---|---|
| | ELEMENT T1 LOAD | ELEMENT PCU LOAD | NUMBER OF SITES IN THE CLUSTER | NUMBER OF SECTORS IN THE CLUSTER | TRX IN THE CLUSTER | BHCA IN THE CLUSTER | ERLANG IN THE CLUSTER | AFTER T1 IN THE CLUSTER | ABIS T1 IN THE CLUSTER | SS7 DS0 IN THE CLUSTER | PCU CHANNELS IN THE CLUSTER | OVERALL COST |
| | 84.5% | 84.2% | 10 | 55 | 347 | 24354 | 677 | 31 | 384 | 2 | 694 | 1.10 |
| | 76.3% | 83.0% | 15 | 83 | 523 | 36752 | 1021 | 46 | 570 | 3 | 1046 | 1.06 |
| | 92.0% | 78.1% | 7 | 39 | 246 | 17269 | 480 | 22 | 273 | 1 | 492 | 1.01 |
| | 80.1% | 70.9% | 8 | 44 | 277 | 19483 | 541 | 25 | 310 | 1 | 554 | 0.97 |
| | 90.0% | 56.7% | 14 | 77 | 485 | 34096 | 947 | 42 | 521 | 2 | 970 | 0.92 |
| | 55.5% | 70.7% | 12 | 66 | 416 | 29225 | 812 | 37 | 459 | 2 | 832 | 0.88 |
| | 73.0% | 61.7% | 4 | 22 | 139 | 9742 | 271 | 13 | 161 | 1 | 278 | 0.83 |
| | 82.0% | 65.7% | 9 | 50 | 315 | 22140 | 615 | 28 | 347 | 2 | 630 | 0.79 |
| | 71.0% | 44.7% | 12 | 66 | 416 | 29225 | 812 | 37 | 459 | 2 | 832 | 0.74 |
| | 68.0% | 64.7% | 18 | 99 | 624 | 43837 | 1218 | 54 | 670 | 3 | 1248 | 0.70 |

FIG. 4C-2

500

START

502 — DATA INPUT: BTS/BSC DEMAND BSC/MSC ELEMENT NETWORK CONNECTIVITY REHOME PLAN HANDOVER

OPTIONAL →

504
DISPLAY INPUT DATA: BSC/MSC UTILIZATION BTS-BSC-MSC CONNECTIVITY

506
CUSTOMER SEQUENCE PLAN INPUT?

NO →

508
GENERATE START SEQUENCE PLAN

YES

518 — LOAD CUSTOMER SEQUENCE PLAN

520 — DISPLAY SEQUENCE: BSC/MSC UTILIZATION

NEED IMPROVEMENT ?

NO

522 YES

510 — PERFORM OPTIONAL SEQUENCE SEARCH

512 — DISPLAY OUTPUT RESULT: BSC/MSC UTILIZATION THROUGH SEQUENCING

ACCEPTED OUTPUT?

NO →

MANUALLY MODIFY REHOMING SEQUENCE

514 YES

516

524 — EXIT

FIG. 5

FIG. 6

700

START

702 — GET CURRENT NETWORK

704

IS THERE A SUBNETWORK UN CLUSTERED ?

NO

END

714

YES

706 — GET NEXT SUBNETWORK, COMPUTE DISTANCE BETWEEN ALL VORONOI NEIGHBORS

708 — SORT THE DISTANCE IN INCREASING ORDER

710 — START FROM THE CLOSE NODE, IF THEY HAVE THE SAME TARGET SUBNETWORK, CREATE SUPER NODE OF THE TWO, MARK THE NODES

HAS UNCLUSTERED NODES?

YES

712 NO

FIG. 7A

START

716 — GET INITIAL
SEQUENCING ORDER
CurrentStep = 1
SearchDepth = 1

718 — COMPUTE GAIN TO
SWITCH CURRENT STEP
WITH FOLLOWING STEPS
AT SEARCH DEPTH

720 — SearchDepth ++

722
SearchDepth
< 5 ? — NO

YES

724 — GET MAX GAIN

MAX GAIN
> 0 ? — NO

726 YES

730 — MAKE RELATED SWITCHES

728 — CurrentStep ++

REACH
LAST STEP
? — NO

732 YES

MAX GAIN
IN PREVIOUS LOOP
< ε ? — NO

734 YES

END

FIG. 7B

27

START

736 — INITIAL SOLUTION: sb := s0; cost: cb :=C(sb)

738 — INITIAL TEMPERATURE T :=T0

740 — k := 0

742 — i := 0

744 — PICK A NEIGHBOR SOLUTION OF CURRENT SOLUTION sn := neighbor(sb)

746 — COMPUTE ITS COST cn := C(sn)

748 — cn <cb? — YES

NO

752 — SHOULD WE MOVE TO IT? random( ) $<P_t$? — YES

750 — SAVE IT sb :=sn; cb :=cn

NO

754 — i :=i+1

756 — i <L? — YES

NO

758 — UPDATE TEMPERATURE T :=$\alpha$ T

760 — k :=k+1

762 — k> KMAX OR REACH TERMINATION CRITERIA ? — NO

YES

764 — RETURN SB

s0: initial sequence
sb: current sequence
sn: neighbor sequence
T0: initial temperature
T: current temperature
cb: cost of current sequence
cn: cost of neighbor sequence
$P_t$: transition probability
$\alpha$: cooling rate
$K_{max}$: maximal number of iterations
L: temperature length
k: loop counter for $K_{max}$
i: loop counter for L

FIG. 7C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 84913906 P
- US 10585011 B
- US 20080046306 A1
- US 0630744 W
- US 5937042 A
- US 6055433 A